# EUROPÄISCHE PATENTSCHRIFT

(11) **EP 2 278 227 B1**
(45) Veröffentlichungstag und Bekanntmachung des Hinweises auf die Patenterteilung: **19.06.2019**
(21) Anmeldenummer: 10401093.9
(22) Anmeldetag: 29.06.2010
(51) Int. Cl.: F24C 15/00, A21B 3/02, F24C 15/04

(54) **BACKOFEN**
BAKING OVEN
FOUR DE CUISSON

(30) Priorität: 15.07.2009 DE 102009033404
(43) Veröffentlichungstag der Anmeldung: 26.01.2011
(73) Patentinhaber: Miele & Cie. KG, 33332 Gütersloh (DE)
(72) Erfinder: Keller, Uwe, 33332 Gütersloh (DE); Render, Joachim, 48231 Warendorf (DE)

(56) Entgegenhaltungen:
- EP-A1- 0 583 180
- EP-A1- 0 615 097
- EP-A1- 0 731 318
- EP-A1- 0 964 208
- DE-A1- 2 533 539
- DE-A1- 10 065 333
- DE-A1-102006 042 173
- US-A1- 2009 107 479

## Beschreibung

Die Erfindung bezieht sich auf einen Backofen mit einer Backmuffel, ausgebildet mit oder ohne einer pyrolytischen Selbstreinigungseinrichtung, welche durch eine Tür nach außen hin verschließbar ist, nach dem Oberbegriff von Anspruch 1.

Bei Backöfen dieser Gattung besteht die Gefahr, dass durch die in der Backmuffel beim Betrieb benötigten hohen Temperaturen, gleichzeitig das Erhitzen der Außenscheibe der Backofentür bewirkt wird, so dass die Oberflächentemperatur an der Türaußenscheibe ein solches Niveau übersteigt, wodurch der Benutzer bei Kontakt mit der Oberfläche der Außenscheibe Verbrennungen erleiden kann. Aus diesem Grund muss für eine ausreichende Kühlung der Außenscheibe der Tür gesorgt werden, um Normen bezüglich einer maximalen Oberflächentemperatur einhalten zu können.

Zur Vermeidung solcher hohen Temperaturen ist es bekannt, eine Luftumwälzung in der Umgebung der Tür, insbesondere in den Zwischenräumen der im Türrahmen der Tür angeordneten Glasscheiben zu schaffen, um die diese aufheizende Wärme abzuleiten.

Die DE 195 24 369 A1 offenbart einen Backofen, der oberhalb dessen Backmuffel eine Ausblasstrecke besitzt, in die ein zwischen einer Türinnenscheibe und einer Türaußenscheibe angeordneter Konvektionshohlraum mündet. Oberhalb der Backmuffel ist ein Kühlluftgebläse angeordnet, das Kühlluft durch die Ausblasstrecke aus dem Backofengehäuse drückt. Im Konvektionshohlraum strömt vertikal von unten nach oben Kühlluft, der sich im oberen Bereich über einen von der Backmuffel führenden Wrasenkanal Wrasen beimischt. Im Bereich der Einmündung des Wrasenkanals in die Ausblasstrecke, ist in dieser eine Engstelle ausgebildet, wodurch durch eine einen Unterdruck bildende Injektorwirkung Wrasen aus dem Wrasenkanal und Kühlluft aus dem Türzwischenraum gesaugt wird. Die Engstelle ist dabei durch ein im Backofentürgriff angeordnetes Luftleitblech realisiert. Nachteilig an dieser Konvektionsluftströmung durch die Backofentür ist dessen aufwendiger Aufbau, wobei die Luftführung durch den Türgriff den Gestaltungsspielraum hinsichtlich der Formgebung limitiert. Zudem besteht für den Nutzer des Backofens weiterhin eine potentielle Verbrennungsgefahr, wenn dieser während des Abführens der heißen Luft den Türgriff des Backofens betätigen möchte.

Aus der DE 103 49 313 A1 ist ein Backofen bekannt, dessen Tür zum Verschließen der Backmuffel einen Türinnenraum aufweist, der seitlich durch zwei sich in auswärtiger Richtung erstreckende Seitenwangen begrenzt ist. In die seitlichen Wangen sind Lufteintrittsöffnungen angeordnet, um von der Seite her einen Lufteintritt in den inneren Türhohlraum zu ermöglichen. Zur Kühlung des Türinnenraums in dessen oberen und besonders starke Hitzeeinwirkung unterliegenden Bereichs, führen vom obersten Abschnitt der Seitenwangen Türbelüftungsschlitze von der Seite her zum Türinnenraum, so dass die in den Seitenwangen befindliche Luft in den oberen Abschnitt des Türinnenraums gelangen kann. Über oberseitig angeordnete Türlüftungsschlitze kann die im Türinneren erhitze Luft nach oben aus der Backofentür entweichen. Nachteilig an dieser Ausführungsform ist, dass nur der obere Bereich der Backofentür durch die erreichte Luftzirkulation gekühlt wird.

Aus der DE 198 53 758 C2 ist eine Backofentür mit drei zueinander beabstandeten Scheiben bekannt geworden, wobei die Backofentür im seitlichen und unteren Bereich Öffnungen aufweist, so dass sich zwischen den Scheiben ein Luftstrom entwickeln und eine Kühlung der Türscheiben bewirkt werden kann. Nachteilig daran ist, dass die Luftzirkulation unkontrolliert aufgrund lediglich einer durch Erwärmung bedingten Konvektionsströmung erfolgt und somit eine ungleichmäßige und nicht ausreichende Kühlung der Türscheiben erfolgt.

Die DE 10 2006 042 173 A1 offenbart einen Backofen mit einer Backmuffel und einer oberhalb der Backmuffel angeordneten Luftführung. Die Backmuffel ist durch eine Tür verschließbar, bei der eine innere und eine äußere Scheibe einen senkrechten Luftkanal bilden. Im oberen Bereich ist auf diesen Luftkanal eine Abdeckung gesetzt, die Luftaustrittsöffnungen zum Ausströmen der im Luftströmungskanal nach oben strömenden und nach außen abgeführten erwärmten Luft aufweist. Außerdem bilden die Scheiben an der Unterseite der Tür eine Lufteinlassöffnung.

Auch die DE 25 33 539 A1 zeigt einen Backofen mit einer Backmuffel und einer oberhalb der Backmuffel angeordneten Luftführung. Die Backmuffel ist durch eine Tür verschließbar, in der ein vertikaler Luftkanal angeordnet ist. Ein Teil dieses Luftkanals wird durch Scheiben gebildet. Der Kanal besitzt im oberen Bereich Luftauslassöffnungen, die in die Luftführung münden, und Lufteinlassöffnungen im unteren Bereich.

Bei einem aus der EP 0 964 208 A1 bekannten Backofen vereinigen sich in einer Luftführung oberhalb der Backmuffel mehrere Kühlluftströme, die dann mittels eines Gebläses über einen mittleren Bereich einer Tür geblasen werden. In diesem Bereich besitzt die Tür einen Luftströmungskanal, der durch eine innere und eine äußere Wand gebildet wird. Nach oben ist der Luftkanal durch eine Abdeckung abgeschlossen, an der sich der Griff der Tür befindet. Der aus der Luftführung austretende Luftstrom reißt die Luft, die durch den Luftströmungskanal fließt, mit, und bläst ihn durch eine Öffnung unterhalb des Türgriffs aus.

Der Erfindung liegt die Aufgabe zugrunde, bei einem Backofen, eine kostengünstige und verbesserte Belüftung der Tür zu ermöglichen, um die Oberflächentemperatur einer wenigstens eine Innen- und eine Außenscheibe aufweisenden Tür weiter zu minimieren.

Die Lösung dieser Aufgabe durch die Erfindung ist dadurch gekennzeichnet, dass die Luftführung als eine Engstelle ausgebildet ist, deren mittlerer Bereich sich oberhalb eines im Bereich eines sich im geschlossenen Zustand der Tür zwischen der Tür und der Backmuffel ergebenden Spalts befindet und der Querschnitt der Luftführung sich nach der Engstelle in Richtung der Außenöffnung hin vergrößert. Durch diese erfindungsgemäße Ausgestaltung entsteht vorteilhaft im Bereich der Engstelle eine intensivere Luftströmung, wodurch im Spalt ein Unterdruck aufgebaut und somit eine effektive Belüftung des Luftströmungskanals der Tür bewirkt wird, wodurch die erhitzte Luft aus dem Strömungskanal der Tür abgesaugt und über die Außenöffnung abgeführt werden kann und somit auf konstruktiv einfache Weise eine effektive Türbelüftung und Kühlung erreichbar ist.

Um die notwendige Strömungsgeschwindigkeit in der Luftführung oberhalb der Spaltöffnung zu erreichen, insbesondere um Strömungsverluste in der Luftführung zu vermeiden, ist in vorteilhafter Weiterbildung der Erfindung vorgesehen, dass der Querschnitt der Luftführung sich oberhalb der Backmuffel zur Engstelle hin düsenartig verkleinert.

In vorteilhafter Weiterbildung der Erfindung erstreckt sich der Spalt von oberhalb einer die Backmuffelöffnung umziehenden Dichtung bis zu einer in die Luftströmung der Luftführung mündenden Öffnung, so dass der ohnehin vorhandene Spalt als Luftströmungskanal zur Belüftung und Kühlung der Backofentür nutzbar ist.

Dadurch, dass die Luftführung von der Engstelle bis zur Außenöffnung obenseitig von der Unterseite einer Bedienblende und untenseitig von einer die Türoberkante bildenden Abdeckung begrenzt ist, bilden bereits im Backofen vorhandene Komponenten den letzten im Querschnitt erweiterten Abschnitt der Luftführung, so dass ein zusätzliche Kosten verursachender Materialeinsatz nicht notwendig ist. Zudem kann dadurch die Luftführung oberhalb der Backmuffel und dessen Außenöffnung vor dem Benutzer verborgen werden.

Um auf einfache Weise eine Querschnittsvergrößerung des letzten Abschnitts der Luftführung ausgehend von der an der Engstelle in die Luftführung hineinragenden Spaltöffnung erreichen zu können, ist die Unterseite der Bedienblende horizontal ausgebildet und die die Türoberkante bildende Abdeckung umfasst einen vertikalen an die Innenscheibe angrenzenden Schenkel an den sich ein zur Außenöffnung nach unten geneigter an die Außenscheibe der Tür angrenzender Schenkel anschließt. Dadurch bildet der der Engstelle folgende Abschnitt der Luftführung einen diffusorartigen Querschnitt, so dass im sich im geschlossen Zustand der Tür zwischen der Backmuffel und der Tür ergebenden Spalt ein erhöhter Unterdruck entsteht, wodurch eine verstärkte Sogwirkung im Spalt und im Luftströmungskanal der Backofentür zur wirkungsvollen Türbelüftung erreicht werden kann.

Zum Erreichen einer Querschnittsvergrößerung des letzten Abschnitts der Luftführung ist in einer weiteren Ausgestaltung der Erfindung vorgesehen, dass die Unterseite der Bedienblende schräg nach oben geneigt und die die Türoberkante bildende Abdeckung horizontal ausgebildet ist. Alternativ ist es vorgesehen, dass die Unterseite der Bedienblende schräg nach oben geneigt und die die Türoberkante bildende Abdeckung schräg nach unten geneigt ausgebildet ist, so dass die Querschnittsvergrößerung im der Engstelle nachfolgenden letzten Abschnitt der Luftführung und die damit erreichbare verstärkte Sogwirkung ohne zusätzlichen Materialaufwand konstruktiv auf einfache Weise realisierbar ist.

In einer vorteilhaften Weiterbildung der Erfindung ist vorgesehen, dass der Öffnungswinkel der Außenöffnung der Luftführung etwa 10 Grad beträgt. Dieser Öffnungswinkel bewirkt einen optimalen Luftströmungseffekt in der Luftführung und zugleich an der Engstelle einen erhöhten Unterdruck im in die Luftführung mündenden Spalt, an den sich die in der Türabdeckung angeordneten Luftaustrittsöffnungen des Luftströmungskanals der Backofentür anschließen.

Um eine besonders effektive Kühlung der Tür durch eine verstärkte Belüftung des Strömungskanals im Bereich der Türinnenscheibe bewirken zu können, umfasst die Türabdeckung im Bereich der Engstelle der Luftführung angrenzend an die Innenscheibe der Backofentür wenigstens eine Luftaustrittsöffnung des wenigstens einen Strömungskanals. Dies bewirkt innerhalb des Strömungskanals der Backofentür eine intensivere Belüftung der Innenseite des Luftströmungskanals als an dessen Außenseite, so dass die Hitzestrahlung von der Innenscheibe auf die Außenscheibe der Backofentür erheblich reduziert wird und ein zu starkes Erwärmen der Außenscheibe der Tür verhindert werden kann, so dass die Temperatur an der vom Benutzer berührbaren Oberfläche niedrig gehalten werden kann.

Die Erfindung wird anhand von vier Figuren näher dargestellt. Es zeigen:
- Figur 1: eine perspektivische Seitenansicht eines Backofens gemäß der Erfindung,
- Figur 2: eine schematische Darstellung der Luftführung im oberen Backofenmuffel- und Backofentürbereich,
- Figur 3: die schematische Darstellung der Luftführung im oberen Backmuffel- und Backofentürbereich gemäß Fig. 2 in einer alternativen Ausführungsform,
- Figur 4: eine schematische Darstellung der in Fig. 2 und 3 gezeigten Luftführung im oberen Backmuffel- und Backofentürbereich in einer weiteren alternativen Ausführungsform.

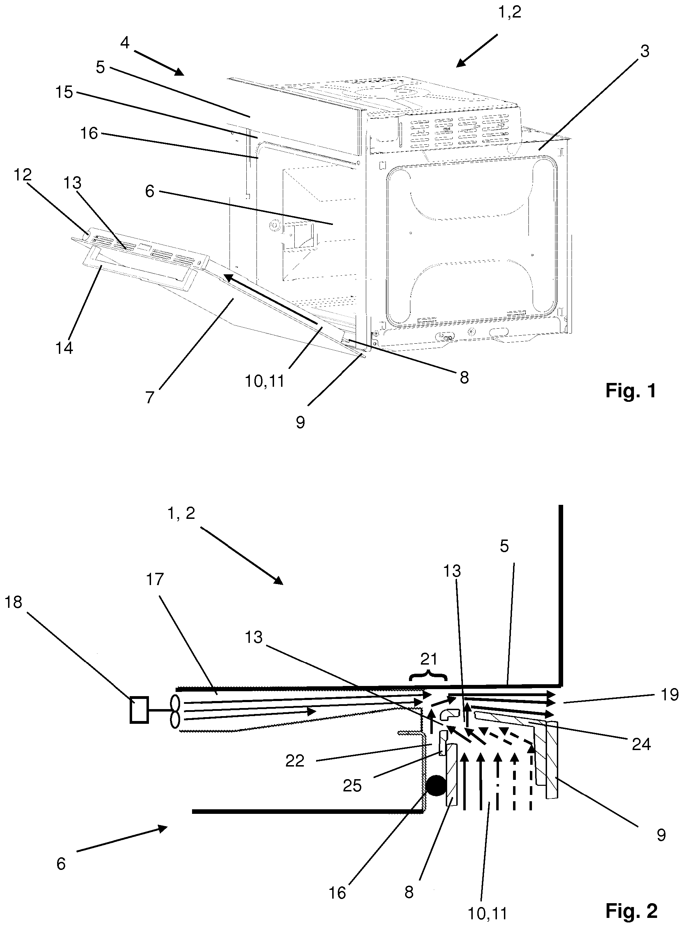

Figur 1 zeigt ein als Backofen 1 ausgebildetes Haushaltgerät 2, das zum Backen und Garen von Speisen eingerichtet ist. Der Backofen 1 umfasst ein äußeres Backofengehäuse 3 mit einer in dessen oberen Frontbereich 4 angeordneten Bedienblende 5. An der Bedienblende 5 sind an sich bekannte und hier nicht näher dargestellte Bedien- und Anzeigenelemente angeordnet. Eine in dem Backofengehäuse 3 vorhandene Backmuffel 6 dient zum Aufnehmen der Speisen. Die Backmuffel 6 weist eine hier nicht näher dargestellte Heizvorrichtung auf, wobei es zudem denkbar ist, dass die Wärmeerzeugung in der Backmuffel 6 alternativ oder zusätzlich mittels Einspeisung von Mikrowellenenergie oder Dampf erfolgt. Die Backmuffel 6 ist gegenüber der Umgebung mit einer um eine horizontale Achse verschwenkbaren Backofentür 7 verschließbar. In an sich bekannter Weise besteht die Backofentür 7 aus einer Innenscheibe 8 und einer Außenscheibe 9, wobei im zwischen den Scheiben 8, 9 vorhandenen Hohlraum 10 weitere hier nicht dargestellte Scheiben angeordnet sein können. Der Hohlraum 10 zwischen den Scheiben 8, 9 bildet einen Luftströmungskanal 11, in den von unten her auf hier nicht näher dargestellte Weise Raumluft einströmen kann. Der Luftströmungskanal 11 zwischen der Innenscheibe 8 und der Außenscheibe 9 ist nach oben durch eine Abdeckung 12 verschlossen, die über dessen Breite in den nachfolgenden Figuren 2 bis 4 noch näher dargestellte Luftaustrittsöffnungen 13 umfasst. Beim Betrieb des Backofens 1 entsteht aufgrund der Temperaturunterschiede innerhalb des Luftströmungskanals 11 der Backofentür 7 eine Konvektionsströmung, wodurch entsprechend der dargestellten Pfeilrichtung eine Luftströmung von unten nach oben erfolgt. Am oberen Rand der Türaußenscheibe 9 befindet sich eine sich nahezu über die Breite der Backofentür 7 erstreckende Griffleiste 14. Die Backmuffel 6 ist frontseitig durch einen Flansch 15 mit einer die Backmuffelöffnung umziehenden Dichtung 16 begrenzt. Oberhalb der Backmuffel 6 befindet sich, wie in den Fig. 2 bis 4 noch näher darzustellen ist, eine Luftführung mit einem Kühlgebläse, das Kühlluft in Richtung einer Außenöffnung drückt.

Fig. 2 zeigt in einer vereinfachten schematischen Seitenansicht die erfindungsgemäße Ausbildung der Luftführung 17 und dessen Luftströmung im Bereich oberhalb der Backmuffel 6 und des oberen Frontbereichs 4 des Backofens 1. In der horizontal ausgebildeten Luftführung 17, die obenseitig von einer horizontal angeordneten Bedienblende 5 und untenseitig vom Backmuffelgehäuse 20 bzw. im letzten Abschnitt der Luftführung von einer Türabdeckung 12 begrenzt ist, wird mittels eines Kühlgebläses 18 erhitzte Luft aus dem Backofengehäuse 3 gemäß Pfeilrichtung durch eine zwischen der Bedienblende 5 und der Türabdeckung 12 liegende Außenöffnung 19 ins Freie abgeführt. Im geschlossen Zustand der Tür bilden die Bedienblende und die Außenscheibe der Backofentür eine plane Oberfläche, die horizontal durch die Außenöffnung der Luftführung unterbrochen ist. Die Luftführung 17 verengt sich aus Richtung des angeordneten Kühlgebläses 18 düsenartig bis zu einer in die Luftführung 17 ausgebildeten Engstelle 21, deren mittlerer Bereich sich oberhalb eines sich im geschlossen Zustand der Backofentür 7 zwischen der Backofentür 7 und der Backmuffel 6 ergebenden Spaltes 22 befindet. Die Backofentür 7, die einen durch eine Innenscheibe 8 und eine Außenscheibe 9 begrenzten Luftströmungskanal 11 umfasst, wird nach oben hin durch eine Abdeckung 12 begrenzt. Die Abdeckung 12 umfasst obenseitig einen nach unten geneigten, an die Außenseite der Backofentür 7 angrenzenden Schenkel 24 an den sich ein vertikaler erstreckender an die Türinnenscheibe 8 angrenzender Schenkel 25 anschließt, wodurch erfindungsgemäß auf konstruktiv einfache Weise eine Querschnittsvergrößerung der Luftführung 17 ausgehend von der Engstelle 21 bis zur Außenöffnung 19 der Luftführung 17 erreicht werden kann. Wenn die Backmuffel 6 erwärmt wird, erhitzt sich die als Begrenzung der Backmuffelöffnung dienende Innenscheibe 8 und durch Hitzestrahlung nachfolgend auch die Außenscheibe 9 der Backofentür 7. Die von unten in den Luftströmungskanal 11 eintretende Luft steigt durch die Thermik auf, welches jedoch zur effektiven Türbelüftung und -kühlung nicht ausreichend ist.

Mittels der erfindungsgemäßen Ausbildung der Luftführung 17 bewirkt die durch das in der Luftführung 17 angeordnete Kühlgebläse 18 erzeugte Luftströmung von der Engstelle 2 bis zur im Querschnitt gegenüber der Engstelle 21 vergrößerten Außenöffnung 19, eine sich in Pfeilrichtung erhöhende Luftströmungsgeschwindigkeit. Durch die Erhöhung der Luftströmungsgeschwindigkeit entsteht vorteilhaft im in die Luftführung 17 mündenden Spalt 22 ein Unterdruck gemäß des sogenannten Venturi-Effektes, der über die in der Abdeckung 12 der Backofentür 7 vorhandenen Luftaustrittsöffnungen 13, die einerseits im vertikalen Schenkel 25 und direkt im daran horizontal anschließenden Schenkel 24 der Abdeckung 12 angeordnet sind, gemäß der dargestellten Pfeilrichtungen im Luftströmungskanal 11 das Ansaugen der aufsteigenden Raumluft bewirkt. Dadurch findet eine gegenüber der natürlichen Thermik verbesserte Belüftung und Kühlung des Luftströmungskanals 11 statt. Durch die verstärkte Luftströmung und damit verstärkte Belüftung und Kühlung der Türinnenscheibe 8 wird auf konstruktiv einfache Weise ein zu starkes Erwärmen der Außenscheibe 9 der Backofentür 7 verhindert, so dass die Temperatur an der Oberfläche der Türaußenscheibe 9 auch im Hochtemperaturbetrieb des Backofens 1 für mit der Außenscheibe 9 in Kontakt tretende Benutzer ungefährlich ist. Eine besonders effektive Belüftung und Kühlung der Tür 7 ist erreichbar, wenn die Außenöffnung 19 der Luftführung 17, durch die die erhitzte Luft ins Freie abgegeben wird, einen Öffnungswinkel von etwa 10° Grad aufweist.

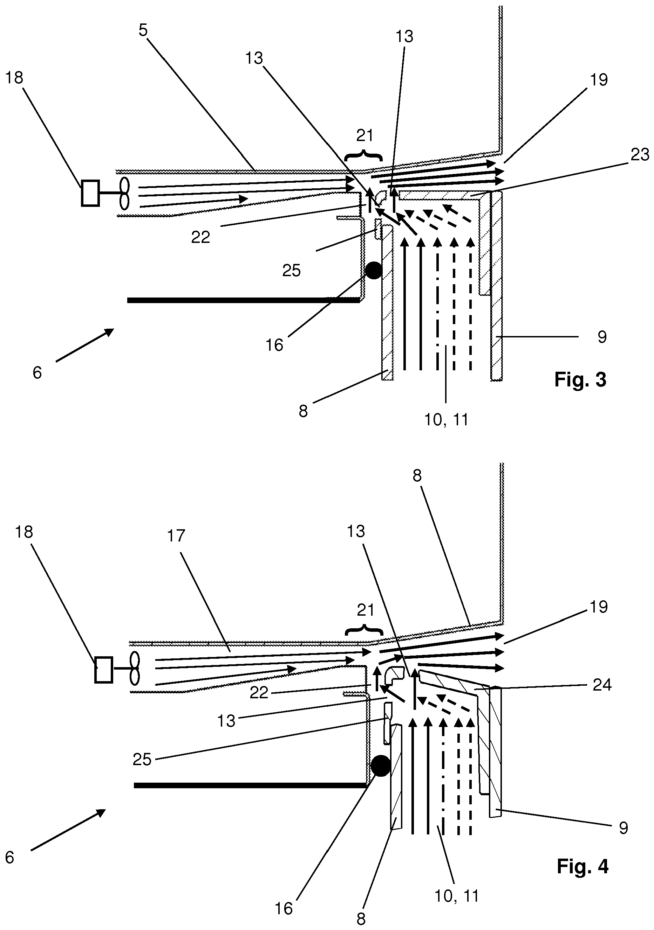

In Figur 3 ist eine schematische Darstellung der in Figur 2 gezeigten Luftführung 17 im oberen Backmuffel- und Backofentürbereich in einer alternativen Ausführungsform gezeigt. Die Backenofentür 7 befindet sich im die Backmuffelöffnung verschließenden Zustand, wobei die Tür 7 eine Innenscheibe 8 und Außenscheibe 9 und einen dazwischenliegenden Luftströmungskanal 11 aufweist. Zwischen der Backmuffel 6 und der Backofentür 7 bildet sich oberhalb einer die Backmuffel 8 umgebenden Dichtung 16 ein Spalt 22, der in die oberhalb der Backmuffel 6 horizontal angeordnete Luftführung 17 mündet, wobei die Luftführung 17 im Bereich der Spaltmündung als Engstelle 21 ausgebildet ist. Die Luftführung 17 wird obenseitig von der horizontal verlaufenden Unterseite der Bedienblende 5 gebildet, wobei im Gegensatz zur Figur 2 etwa im Bereich oberhalb der Spaltöffnung die Unterseite der Bedienblende 6 bis zur Außenöffnung 19 nach oben geneigt verläuft. Die Unterseite der Luftführung 17 wird bis zur Spaltöffnung vom Backmuffelgehäuse 6 gebildet, wobei sich die Luftführung 17 bis zur sich oberhalb der Spaltöffnung befindenden Engstelle 21 düsenartig verengt. Nach der Spaltöffnung bildet ein horizontaler Schenkel 23 der Türabdeckung 12 die Unterseite der Luftführung 12, so dass ausgehend von der Engstelle 21 bis zur Außenöffnung 19 eine Querschnittsvergrößerung der Luftführung 19 bewirkt wird. Entsprechend der Figur 1 weist die Abdeckung 12 Luftaustrittsöffnungen 13 einerseits im vertikalen an den Spalt 22 angrenzenden Schenkel 25 und im spaltnahen Bereich des horizontalen Schenkels 23 auf. Entsprechend der Figur 2 verdeutlichen die in Figur 3 dargestellten Pfeile den Strömungsverlauf der erhitzten und mittels des Kühlgebläses zur Außenöffnung 19 strömenden Luft, wobei die Strömungsintensität innerhalb der Luftführung 17 bzw. die Sogwirkung im Spalt 25 und im Luftströmungskanal 11 durch die Pfeildicke bzw. durch die strich- und/oder strichpunktförmige Ausführung der Pfeile definiert ist. Breitere und durchgehende Pfeile stellen dabei eine höhere Strömungsintensität der Luft dar.

Eine weitere alternative Ausführungsform der Luftführung 17 im oberen Backmuffel- und Backofentürbereich ist in Figur 4 gezeigt. Gegenüber den in den Figuren 2 und 3 dargestellten Ausführungsformen wird die Querschnittsvergrößerung des der Engstelle 21 nachfolgenden und bis zur Außenöffnung 19 reichenden letzten Abschnitts der Luftführung 17 dadurch erreicht, dass die Unterseite der Bedienblende 5 von der Engstelle 21 bis zur Außenöffnung 19 nach oben geneigt ausgebildet ist und die Türabdeckung 12 obenseitig einen nach unten geneigten an die Innenseite der Außenscheibe 9 der Backofentür 7 angrenzenden Schenkel 24 umfasst. Entsprechend der Figuren 2 und 3 stellen die dargestellten Pfeile den Strömungsverlauf und die Strömungsintensität der durch das Kühlgebläse erzeugten Luftströmung dar.

### Bezugszeichen:

- 1: Backofen
- 2: Haushaltgerät
- 3: Backofengehäuse
- 4: oberer Frontbereich
- 5: Bedienblende
- 6: Backmuffel
- 7: Backofentür
- 8: Innenscheibe
- 9: Außenscheibe
- 10: Hohlraum
- 11: Luftströmungskanal
- 12: Abdeckung
- 13: Luftaustrittsöffnungen
- 14: Griffleiste
- 15: Flansch
- 16: Dichtung
- 17: Luftführung
- 18: Kühlgebläse
- 19: Außenöffnung
- 20: Backmuffelgehäuse
- 21: Engstelle
- 22: Spalt
- 23: horizontaler Schenkel
- 24: geneigter Schenkel
- 25: vertikaler Schenkel

## Patentansprüche

1. Backofen (1) mit einer Backmuffel (6), einer oberhalb der Backmuffel (6) angeordneten Luftführung (17), in die eine mittels eines im hinteren Bereich des Backofens (1) angeordneten Kühlgebläses (18) erzwungene Luftströmung in Richtung einer im vorderen Bereich des Backofens (1) angeordneten Außenöffnung (19) entweicht, und einer die Backmuffel (6) verschließenden Tür (7), die wenigstens einen durch innere und äußere Scheiben (8, 9) begrenzten senkrechten Luftströmungskanal (11) besitzt, der durch eine die Türoberkante bildende Abdeckung (12) nach oben hin begrenzt ist und wobei die Abdeckung (12) wenigstens eine Luftaustrittsöffnung (13) zum Ausströmen der im Luftströmungskanal (11) nach oben strömenden und nach Außen abgeführten erwärmten Luft aufweist und die Türunterseite wenigstens eine Lufteinlassöffnung umfasst,
**dadurch gekennzeichnet,**
**dass** die Luftführung (17) als eine Engstelle (21) ausgebildet ist, deren mittlerer Bereich sich oberhalb eines im Bereich eines sich im geschlossenen Zustand der Tür (7) zwischen der Tür (7) und der Backmuffel (6) ergebenden Spalts (22) befindet, und dass der Querschnitt der Luftführung (17) sich nach der Engstelle (21) in Richtung der Außenöffnung (19) hin vergrößert.

2. Backofen (1) nach Anspruch 1,
**dadurch gekennzeichnet,**
**dass** der Querschnitt der Luftführung (17) sich oberhalb der Backmuffel (6) zur Engstelle (21) hin düsenartig verkleinert.

3. Backofen (1) nach wenigstens einem der vorhergehenden Ansprüche,
**dadurch gekennzeichnet,**
**dass** der Spalt (22) sich von oberhalb einer die Backmuffelöffnung umziehenden Dichtung (16) bis zu einer in die Luftströmung der Luftführung (17) mündenden Spaltöffnung erstreckt.

4. Backofen (1) nach wenigstens einem der vorhergehenden Ansprüche,
**dadurch gekennzeichnet,**
**dass** die Luftführung (17) von der Engstelle (21) bis zur Außenöffnung (19) obenseitig von der Unterseite einer Bedienblende (5) und untenseitig von einer die Türoberkante bildenden Abdeckung (12) begrenzt ist.

5. Backofen (1) nach wenigstens einem der vorhergehenden Ansprüche,
**dadurch gekennzeichnet,**
**dass** die Unterseite der Bedienblende (5) horizontal ausgebildet ist und die die Türoberkante bildende Abdeckung (12) einen vertikalen an die Innenscheibe (8) angrenzenden Schenkel (25) und daran anschließend in Richtung Außenöffnung (19) einen nach unten geneigten an die Außenscheibe (9) der Backofentür angrenzenden Schenkel (24) umfasst.

6. Backofen (1) nach wenigstens einem der vorhergehenden Ansprüche,
**dadurch gekennzeichnet,**
**dass** die Unterseite der Bedienblende (5) nach oben geneigt und der die Türoberkante bildende Schenkel (23) der Abdeckung (12) horizontal ausgebildet ist.

7. Backofen (1) nach wenigstens einem der vorhergehenden Ansprüche,
**dadurch gekennzeichnet,**
**dass** die Unterseite der Bedienblende (5) nach oben geneigt und der die Türoberkante bildende Schenkel (24) der Abdeckung (12) nach unten geneigt ausgebildet ist.

8. Backofen (1) nach wenigstens einem der vorhergehenden Ansprüche,
**dadurch gekennzeichnet,**
**dass** der Öffnungswinkel der Außenöffnung (19) um etwa 10° Grad beträgt.

9. Backofen (1) nach wenigstens einem der vorhergehenden Ansprüche,
**dadurch gekennzeichnet,**
**dass** der vertikale an die Innenscheibe (8) angrenzende Schenkel (25) der Türabdeckung (12) wenigstens eine Luftaustrittsöffnung (13) des wenigstens einen Strömungskanals (11) umfasst.

10. Backofen (1) nach wenigstens einem der vorhergehenden Ansprüche,
**dadurch gekennzeichnet,**
**dass** die Türabdeckung (12) im Bereich der Engstelle (21) der Luftführung (17) angrenzend an die Innenscheibe (8) der Backofentür (7) wenigstens eine Luftaustrittsöffnung (13) des wenigstens einen Strömungskanals (11) umfasst.

## Claims

1. Baking oven (1) comprising a baking muffle (6), an air duct (17), which is arranged above the baking muffle (6) and in which an air flow, forced by means of a cooling fan (18) arranged in the rear region of the baking oven (1), escapes towards an opening (19) to the outside arranged in the front region of the baking oven (1), and comprising a door (7), which closes the baking muffle (6) and has at least one vertical air flow channel (11), which is delimited by inner and outer panels (8, 9) and is delimited at the top by a cover (12) forming a door upper edge, and the cover (12) comprising at least one air outlet opening (13) for the heated air to flow out of, which air flows upwards in the air flow channel (11) and is guided outside, and the underside of the door comprising at least one air inlet opening, **characterised in that**
the air duct (17) is in the form of a constriction (21), the central region of which is located above a gap (22) that is formed between the door (7) and the baking muffle (6) when the door (7) is closed, and **in that**, downstream of the constriction (21), the cross section of the air duct (17) enlarges towards the opening (19) to the outside.

2. Baking oven (1) according to claim 1,
**characterised in that**
the cross section of the air duct (17) reduces in size, in a nozzle-like manner, above the baking muffle (6) towards the constriction (21).

3. Baking oven (1) according to at least one of the preceding claims, **characterised in that** the gap (22) extends from above a seal (16) that surrounds the baking muffle opening to a gap opening that opens into the air flow of the air duct (17).

4. Baking oven (1) according to at least one of the preceding claims, **characterised in that** the air duct (17) is delimited, from the constriction (21) to the opening (19) to the outside, at the top by the underside of a control panel (5) and at the bottom by a cover (12) forming the door upper edge.

5. Baking oven (1) according to at least one of the preceding claims, **characterised in that** the underside of the control panel (5) is horizontal and the cover (12) forming the door upper edge has a vertical leg (25), which adjoins the inner panel (8), and a downwardly inclined leg (24), which is connected thereto towards the opening (19) to the outside and adjoins the outer panel (9) of the baking oven door.

6. Baking oven (1) according to at least one of the preceding claims, **characterised in that** the underside of the control panel (5) is inclined upwards and the leg (23) of the cover (12) forming the door upper edge is horizontal.

7. Baking oven (1) according to at least one of the preceding claims, **characterised in that** the underside of the control panel (5) is inclined upwards and the leg (24) of the cover (12) forming the door upper edge is inclined downwards.

8. Baking oven (1) according to at least one of the preceding claims, **characterised in that** the opening angle of the opening (19) to the outside is approximately 10°.

9. Baking oven (1) according to at least one of the preceding claims, **characterised in that** the vertical leg (25) of the door cover (12) adjoining the inner panel (8) comprises at least one air outlet opening (13) of the at least one flow channel (11).

10. Baking oven (1) according to at least one of the preceding claims, **characterised in that**, in the region of the constriction (21) of the air duct (17) adjoining the inner panel (8) of the baking oven door (7), the door cover (12) comprises at least one air outlet opening (13) of the at least one flow channel (11).

## Revendications

1. Four de cuisson (1) doté d'un moufle de cuisson (6), d'un guidage d'air (17) disposé au-dessus du moufle de cuisson (6) dans laquelle s'échappe un écoulement d'air forcé grâce à un ventilateur de refroidissement (18) disposé dans la zone arrière du four de cuisson (1) dans le sens d'une ouverture extérieure (19) disposée dans la zone avant du four de cuisson (1), et d'une porte (7) fermant le moufle de cuisson (6) qui est munie d'un ou de plusieurs conduit(s) d'écoulement d'air (11) vertical/verticaux délimité(s) par des vitres intérieures et extérieures (8, 9) qui est/sont délimité(s) vers le haut par un revêtement (12) formant le bord supérieur de la porte et **caractérisé en ce que** le revêtement (12) présente au moins une ouverture de sortie d'air (13) permettant l'écoulement de l'air réchauffé s'écoulant vers le haut dans le conduit d'écoulement d'air (11) et évacué vers l'extérieur et le bas de la porte comprenant au moins une entrée d'air, **caractérisé en ce**
**que** le guidage d'air (17) est conçu sous la forme d'un rétrécissement (21) dont la zone centrale est située au-dessus dans la zone d'une fente (22) résultant de l'état fermé de la porte (7) entre la porte (7) et le mufle de cuisson (6), et **en ce que** la section transversale du guidage d'air (17) augmente en fonction du rétrécissement (21), dans la direction de l'ouverture extérieure (19).

2. Four de cuisson (1) selon la revendication 1,
**caractérisé en ce**
**que** la section transversale du guidage d'air (17) diminue sous forme de buse au-dessus du moufle de cuisson (6) vers le rétrécissement (21).

3. Four de cuisson (1) selon au moins l'une des revendications précédentes, **caractérisé en ce**
**que** la fente (22) s'étend depuis le dessus d'un joint (16) entourant l'ouverture du moufle de cuisson jusqu'à une ouverture de fente dans l'écoulement d'air du guidage d'air (17).

4. Four de cuisson (1) selon au moins l'une des revendications précédentes, **caractérisé en ce**
**que** le guidage d'air (17) est délimité depuis le rétrécissement (21) jusqu'à l'ouverture extérieure (19) en haut par la face inférieure d'un panneau de commande (5) et en bas par un revêtement (12) formant le bord supérieur de la porte.

5. Four de cuisson (1) selon au moins l'une des revendications précédentes, **caractérisé en ce**
**que** la face inférieure du panneau de commande (5) est formée de manière horizontale et le revêtement (12) formant le bord supérieur comprend un bras vertical (25), adjacent à la vitre intérieure (8) et en outre dans la direction de l'ouverture extérieure (19) un bras incliné vers le bas (24), adjacent à la vitre extérieure (9) de la porte du four de cuisson.

6. Four de cuisson (1) selon au moins l'une des revendications précédentes, **caractérisé en ce**
**que** la face inférieure du panneau de commande (5) est inclinée vers le haut et le bras formant le bord supérieur de la porte (23) du revêtement (12) est formé horizontalement.

7. Four de cuisson (1) selon au moins l'une des revendications précédentes, **caractérisé en ce**
**que** la face inférieure du panneau de commande (5) est inclinée vers le haut et le bras formant le bord supérieur de la porte (24) du revêtement (12) est formé de manière inclinée vers le bas.

8. Four de cuisson (1) selon au moins l'une des revendications précédentes, **caractérisé en ce**
**que** l'angle d'ouverture de l'ouverture extérieure (19) est d'environ 10 degrés.

9. Four de cuisson (1) selon au moins l'une des revendications précédentes, **caractérisé en ce**
**que** le bras vertical (25), adjacent à la vitre intérieure (8) du revêtement de porte (12) comprend au moins une ouverture de sortie d'air (13) d'un ou de plusieurs conduit(s) d'écoulement (11).

10. Four de cuisson (1) selon au moins l'une des revendications précédentes, **caractérisé en ce**
**que** le revêtement de porte (12) comprend au moins une ouverture de sortie d'air (13) d'un ou de plusieurs conduit(s) d'écoulement (11) dans la zone de rétrécissement (21) du guidage d'air (17) adjacent à la vitre intérieure (8) de la porte (7) du four.
